Europäisches Patentamt

European Patent Office

Office européen des brevets

(11) Publication number: **0 189 365**
A1

(12) # EUROPEAN PATENT APPLICATION

(21) Application number: 86630010.6

(22) Date of filing: 16.01.86

(51) Int. Cl.⁴: **F 16 C 33/58**, F 16 C 35/06

(30) Priority: 24.01.85 US 694728

(43) Date of publication of application: 30.07.86
Bulletin 86/31

(84) Designated Contracting States: DE FR GB IT SE

(71) Applicant: **REXNORD INC., 350 N. Sunny Slope,
Brookfield, WI 53005 (US)**

(72) Inventor: **Grunze, Mark R., 224 Tan Oak Lane, Naperville
Illinois 60540 (US)**
Inventor: **Bozych, Dennis E., 5429 Carpenter Street,
Downers Grove Illinois 60515 (US)**
Inventor: **Warrick, Robert B., 5N. 631 Forest Glen Lane,
St. Charles Illinois 60174 (US)**

(74) Representative: **Weydert, Robert et al, Office
Dennemeyer S.à.r.l. 21-25 Allée Scheffer P.O. Box 41,
L-2010 Luxembourg (LU)**

(54) **Selectively hardened stakable bearing.**

(57) A rolling element bearing is disclosed having a ductile
outer ring (24) with an annular groove (30) and a staking
lip (32) which secures the bearing (10) in a housing (12) yet
allows replacement of bearings in housings without destruc-
tively altering those housings. The bearing (10) of the present
invention is also equipped with a selectively hardened outer
race (26) which permits extended low friction operation
where precision control movement is required.

EP 0 189 365 A1

The present invention pertains to bearings, and in particular to rolling element bearings used in situations where the bearing must be secured in a housing, yet be replaceable without damaging the housing.

There are three basic groups of bearings in use today: metal to metal friction bearings, such as those having a ball and socket arrangement lined friction bearings, where the moving elements are lined or coated with a low friction or self-lubricating material, and lowest friction rolling element bearings, in which the moving elements are separated by independently moving elements such as balls, needles or rollers.

Rolling element bearings are normally used in situations where precise control over the movement of the rotating parts is desired and where a low coefficient of friction is necessary. For example, modern aircraft use computer assisted flight control devices which require extremely precise position control of components such as rudders, flaps and landing gear, and which have consequently increased the demand for rolling element bearings in the linkages which control the movement and position of these components. One of the reasons that rolling element bearings are well suited to this application is the extremely low wear rate of the hardened steel contacting surfaces.

Prior art aircraft rolling element bearings have been held in the housing by: a) retaining plates, b) threaded locking rings, and c) stakable sleeves or by staking (or bending and crimping) a lip of the housing over the outer ring of the bearing.

These first three retention methods are undesirable due to their additional weight and the cost of both the retaining devices themselves and the necessary alterations in the housings which accept them. When a bearing is secured by staking the housing over it, the drawbacks of plates and threaded rings are eliminated, and the bearing is adequately retained in the housing. However, when a bearing must be replaced, the staked lip of the housing must be cut or deformed, often damaging the housing and restricting the number of times it may be reused.

Unfortunately, it has become a relatively common practice in the aircraft industry to discard a housing worth many times the cost of the bearing in order to replace only the bearing. The reworking of the housing to generate a new staking lip for use with an oversized bearing or with a normal bearing and sleeve is an expensive and unsatisfactory remedy to this problem. A costly variant of the latter method is to retain a bearing with a sleeve fitted with two lips for double staking; one lip is staked over the housing and the other is staked over the bearing.

A fourth method of replaceably securing a bearing in the housing is to create a staking lip on the relatively ductile outer rim of that bearing which is then staked over the housing. When the bearing must be replaced, the staking lip of the bearing is cut or deformed without causing any damage to the housing. The damage to the bearing is inconsequential, since it will be discarded anyway. This last method has been used with lined or metal to metal spherical friction bearings in which the outer ring is made of a relatively ductile alloy.

The creation of a stakable lip on the outer ring has been heretofore impracticable with rolling element bearings because of the necessity for the latter to be manufactured from hardenable steels to obtain optimum performance. The hardened outer ring of rolling element bearings currently available is too hard and brittle to be staked and will crack under the pressure of a staking tool.

Prior art bearings which were ductile enough to allow the addition of a stakable lip to the outer ring were fabricated of alloys which were too soft to provide the abovementioned properties demanded by users of roller element bearings.

The concept of selectively hardening steel alloys in some areas of an object while retaining ductility in other areas has been discussed by Gullicksen in U.S. Patent 3,408,237. However, previous to the present invention, this technology has not been applied to enhance the installation of rolling element bearings.

Thus, there has been a long-felt need in the aircraft bearing industry for a hardened rolling element bearing which can be staked in a housing without damaging that housing during initial installation or subsequent replacement, yet retain the precise, low friction action for which this type of bearing is well-known, and for which extremely hard race surfaces are necessary.

It is therefore a principal objective of the present invention to provide a rolling element bearing which has a stakable outer ring yet is simultaneously selectively hardened in the race area to achieve the required low friction characteristics and long life of rolling element bearings.

The present invention discloses a bearing, and specifically a rolling element bearing in which the outer ring is fabricated of a grade of steel which, after heat treating and selective hardening has sufficient ductility to allow the addition of a staking lip in the outer ring to permit the bearing to be staked into a housing. The stakable outer ring of the present invention is selectively hardened in the race area to provide the bearing with the desired low friction operation and long life.

The rolling element bearing of the present invention comprises a circular inner ring of hardened alloy having a central axial bore designed to accept a pin. The inner ring further comprises a peripheral inner race surface. A plurality of hardened rolling elements distributed around the inner race are rotatably engaged thereon, and are held in place by a circular outer ring encompassing the rolling elements and which loosely sandwiches them against the inner race. The rolling elements may be separated from each other and guided in their rotation by a retainer. The bearing may also be fitted on both sides with a protective circular plate and an elastomeric seal to protect the rolling elements and races from contamination by dirt or moisture.

The outer ring is fabricated of a hardenable ductile alloy yet has a selectively hardened race area in contact with the rolling elements. Thus, the rolling elements rotate between hardened inner and outer race surfaces. The outer ring is also fitted with an annular groove on at least one side which delineates a staking lip. The bearing of the present invention is secured in a housing with a staking tool, which flares the staking lip against the surface of the housing to hold the bearing in place. When the bearing is replaced, the staking lip is cut and the bearing is pushed out of the housing.

Selective hardening of the outer race may be accomplished by any of a number of established hardening processes, such as lasers, induction hardening and carburization. Carburization , the preferred method, begins by copper-plating the outer ring before the final machining process, then machining off the plating in the race area. The outer ring is then subjected to carburization, which takes effect only in the exposed race area due to the protective nature of the copper-plating. The balance of the copper is then removed by chemical means before the outer ring goes through the final machining process. After machining, the entire outer ring is heat treated to complete the hardening of the race and to provide marginal hardness to the rest of the race. Staking grooves are then cut on each side of the outer ring. Finally, the entire outer ring is plated for corrosion protection and the races are finished by grinding. The result is a ductile outer ring with a hardened outer race.

A more thorough understanding of the present invention will be gained by reading the following description of the preferred embodiments with reference to the accompanying drawings in which:

The invention and its many attendant objects and advantages will become better understood by reference to the following detailed description of the preferred embodiment when read in conjunction with the following drawings, wherein:

Figure 1 is a section elevation of the rolling element bearing of the present invention mounted in a housing;

Figure 2 is an enlarged view of the staking groove of the rolling element bearing in Figure 1 before the staking process has occurred; and

Figure 3 is an enlarged view of the staking groove of the rolling element bearing shown in Figure 1 after the staking process has occurred.

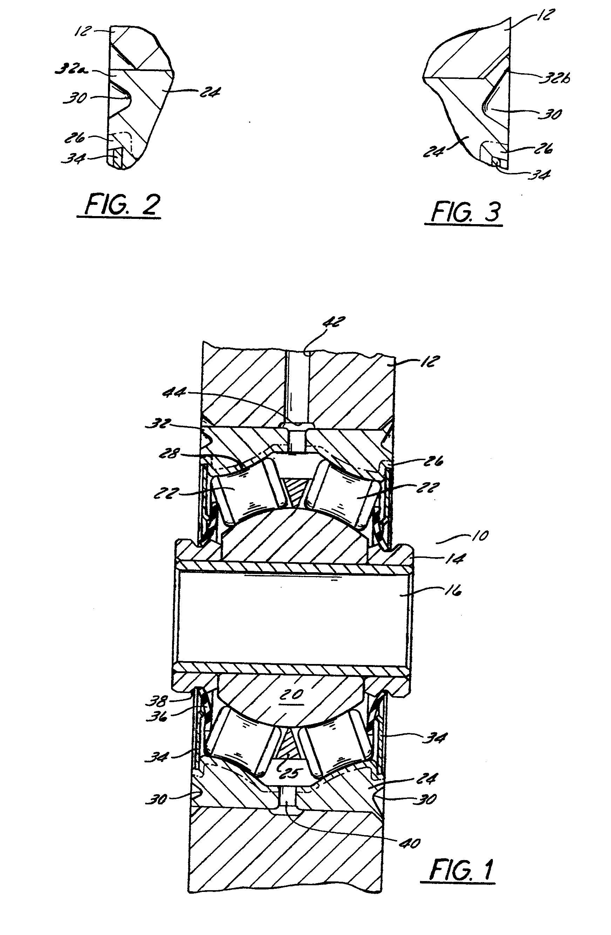

Referring now to the drawings, wherein like reference characters designate identical or corresponding parts, a rolling element bearing 10 is shown mounted in a housing 12. The bearing comprises a circular inner ring 14 fabricated of hardened alloy and having a central axial bore 16 designed to accept a pin (not shown). The inner ring is also comprised of an inner race 20 upon which a plurality of rolling elements 22 are arranged. In the preferred embodiment pictured in Figure 1, there are two rows of rolling elements 22 which are rollers of an hourglass shape conforming to the curvature of the convex inner race 20. However, the rolling elements could be balls, needles, or barrels of any suitable shape known in the bearing art. No matter which shape of rolling element is selected, the inner and outer races will be designed to conform to that shape. The rollers 22 rotate about their longitudinal axis, and are free to rotate around the race. The rollers are held in place by the hardened race 26 of the circular outer ring 24 which loosely sandwiches the rolling elements 22 against the inner race 20. In some cases a retainer 25 separates and guides the movement of the rolling elements between the races.

The outer ring can be made of any selectively hardenable grade of steel such as 9310, 3310, 3312, 8620 or 4620 and comprises an outer race 26 having a shape which conforms to the shape of the rolling elements. In the preferred embodiment, a pair of convex annular projections 28 constructively engage the hourglass-shaped rolling elements 22. The outer ring 24 is selectively hardened in the race area, and then fully hardened in a process described in greater detail below.

The ductility of the outer ring 24 facilitates the cutting thereon of an annular staking groove 30 into at least one side of the bearing 10 near the outer margin of the outer ring. The creation of the staking groove delineates a stakable lip 32 on the outer margin of the outer ring 24.

When the bearing 10 is properly positioned in the housing 12 a staking tool (not shown) is used to swage the staking lip from its normal positon 32a against the housing 12 as shown in 32b to secure the bearing 10 in the housing. Unless the housing or bearing is equipped with a specialized retaining fixture at one end, both sides of the bearing will have to be staked.

When the bearing must be replaced staking lip 32 is deformed or cut on one side and the bearing 10 is pushed out without destructively altering the housing 12.

Bearing 10 is equipped on both sides with a circular protective shield 34 and an elastomeric seal 36 to prevent dirt and moisture from entering the race area. Seal 36 is held in place by shield 34 and an annular groove 38 in the inner ring 14.

The bearing 10 is lubricated by means of an annular grease groove 44 which receives grease from a similar groove 42 in housing 12, and allows it to enter the interior of the bearing through a grease hole 40.

Although any of a number of commonly used selective hardening processes may be used, such as nitriding, induction hardening or carburization, the outer ring 24 of the preferred embodiment is hardened by carburization in the following manner. Beginning with a roughly machined outer ring 24, a copper-plating is applied to the entire surface of the outer ring. This plating masks the stakable portions of the outer ring from the selective race surface hardening process. Before the carburizing process begins, the copper is machined off only the outer race area 26. The outer ring is then subjected to carburization, which provides high hardness potential to only the outer race 26.

The carburization process is normally followed by quenching and tempering the race to produce a hardness of at least 58 Rockwell C, for it has been established that harder races produce longer life. For comparison, the non-hardened portion of the outer ring normally has a hardness in the approximate range of from 28 to 40 Rockwell C.

The entire outer ring is heat treated to complete the

0189365

selective hardening of the race and to provide adequate core hardness to the rest of the outer race.

When the carburization process is complete, the copper is removed from the entire outer ring. A cutting tool is used to cut a staking groove into at least one and preferably both sides of the outer ring. It is then given a corrosion-resistant plating followed by the final operation of grinding the race surfaces.

Thus, the present invention provides a rolling element bearing in which the outer ring has ductile properties which facilitate the attachment of the bearing to a housing by a staking process while retaining housing integrity for future bearing replacement; as well as a selectively hardened outer race for the low friction, long wearing operation required in specialized applications such as aircraft flight control mechanisms.

While a particular embodiment of this bearing has been shown and described, it will be obvious to persons skilled in the art that changes and modifications might be made without departing from the invention in its broader aspects. For example, the bearing described has a double row configuration, however, single or multi row configurations could also be used. Also, although the preferred embodiment is equipped with hourglass shaped rollers, the rolling elements could be needles, balls or tapered, concave or barrel-shaped rollers. It is the aim of the appended claims to cover all such changes and modifications as fall within the true scope and spirit of the invention.

0189365

CLAIMS

1.      A selectively hardened, stakable rolling element bearing designed to facilitate the relative motion of a pin within a housing, said bearing comprising:

a hardened circular inner ring having an axially oriented cylindrical bore designed to accept said pin, and a peripheral race;

a plurality of rolling elements spaced circumferentially around and rotatably engaging said inner race;

a circular outer ring encircling said rolling elements and having a ductile exterior portion, a selectively hardened outer race portion forming the interior surface of said outer ring, and two sides;

said hardened race portion rotatably engaging said rolling elements; and

said outer ring having on its outer rim an annular stakable lip on at least one of said sides for securing the bearing to said housing.

2.      A rolling element bearing defined in claim 1 wherein said outer ring has an annular staking groove cut into said ductile exterior portion adjacent to said staking lip on at least one of said sides for securing the bearing to said housing.

3.      A rolling element bearing defined in claim 2, further comprising a pair of protective shields mounted on each side of said outer race and constructed and arranged to prevent dirt, dust and other unwanted substances from interfering with the rotating action of rolling elements between said inner and outer races.

4.      A rolling element bearing defined in claim 2 further comprising sealing means constructed and arranged to prevent the introduction of moisture or foreign particles between said protective shields and said inner race.

5.      A rolling element bearing defined in claim 2 wherein said rollers have an hourglass shape.

6.      A rolling element bearing defined in claim 3 wherein the rollers have an hourglass shape to conform to the curvature of the convex inner race and convex element of said outer race.

7.      A rolling element bearing defined in claim 1 wherein said outer ring contains an annular staking groove on both sides.

8. A rolling element bearing defined in claim 1 wherein said outer ring is constructed of a carburizing grade of steel.

9. A rolling element bearing defined in claim 1 wherein said outer ring is constructed of 9310 grade steel.

10. A rolling element bearing defined in claim 1 wherein said hardened race of said outer ring is selectively hardened by carburization.

11. A method of manufacturing a rolling element bearing having a selectively hardened outer race and a ductile outer ring fitted with a staking lip to facilitate the securing of said bearing in a housing comprising:

providing an inner ring having a central axial bore and a hardened inner race surface forming the outer peripheral surface of said ring;

providing a plurality of hardened rolling elements;

spacing said rolling elements circumferentially around said inner race;

providing a stakable outer ring;

selectively hardening a race area in said outer ring; and

assembling said inner ring, said rolling elements, and said outer ring so that said outer ring encircles said rolling elements which are spaced around said inner ring.

12. The method of manufacturing a rolling element bearing of claim 11 further comprising:

providing an outer ring having a ductile outer rim portion capable of being fitted with a staking lip and a selectively hardened outer race portion forming the interior surface of said outer ring comprising:

roughly machining said outer ring from hardenable steel alloy;

selectively hardening an outer race portion forming the inner surface of said outer ring;

cutting an annular staking groove adjacent to said rim of said outer ring to form a stakable lip on said outer rim;

treating said outer ring with heat; and

plating said outer ring with a corrosion resistant material.

13. A selectively hardened, stakable bearing designed to facilitate the relative motion of a pin within a housing, said bearing comprising;

a hardened circular inner ring having an axially oriented cylindrical bore designed to accept said pin, and a peripheral race;

a circular outer ring having two sides, a ductile exterior portion and a selectively hardened outer race portion located on the interior perimeter of said outer ring; said outer race portion being constructed and arrayed to rotably engage said peripheral race of said inner ring;

said outer ring having on its outer rim an annular stakable lip and an annular staking groove cut into said ductile exterior portion on at least one of said sides for mounting the bearing to said housing.

14. A bearing described in claim 13 further comprising sealing means constructed and arranged to prevent the introduction of moisture or foreign particles between said outer and said inner race.

15. A bearing described in claim 13 wherein a reinforced low-friction material is located between said outer and inner races.

16. Bearing described in claim 15 wherein said material lines said outer race.

0189365

1 / 1

FIG. 2

FIG. 3

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A- 504 894 (G.E. BRADSHAW)<br>* Whole document * | 1,11-13 | F 16 C 33/58<br>F 16 C 35/06 |
| A | US-A-2 259 324 (T.L. ROBINSON)<br>* Page 2, column 1, line 55 - column 2; figure 3 * | 1,11-13 | |
| A | US-A-2 427 072 (C.F. RUBIN)<br>* Column 3, lines 4-15; figures 5,6 * | 1,7,11-13 | |
| A | MACHINERY, vol. 58, no. 12, August 1952, pages 189-191; G.C. CLOSE: "Swaged bearing retention for moderate to high trust loads" | 1,7,11-13 | |
| A | FR-A-2 469 609 (NADELLA) | | TECHNICAL FIELDS SEARCHED (Int. Cl.4)<br><br>F 16 C |
| A | US-A-3 640 592 (R.S. HOWE) | | |
| A | US-A-1 646 947 (P. ARMSTRONG) | | |
| A | US-A-1 459 409 (H.W. McQUAID) | | |

The present search report has been drawn up for all claims

| Place of search | Date of completion of the search | Examiner |
|---|---|---|
| THE HAGUE | 29-04-1986 | BEGUIN C.P. |